# FASCICULE DE BREVET EUROPEEN

(11) **EP 4 042 857 B1**
(45) Date de publication et mention de la délivrance du brevet: **04.09.2024**
(21) Numéro de dépôt: 22155519.6
(22) Date de dépôt: 08.02.2022
(51) Int. Cl.: A01D 57/20, A01D 43/077

(54) **MACHINE AGRICOLE DU TYPE FAUCHEUSE**
LANDWIRTSCHAFTLICHER MÄHER
AGRICULTURAL MOWER

(30) Priorité: 10.02.2021 FR 2101267
(43) Date de publication de la demande: 17.08.2022
(73) Titulaire: Kuhn SAS, 67700 Saverne (FR)
(72) Inventeur: WILHELM, Joël, 57820 SAINT-LOUIS (FR)
(74) Mandataire: Hager, Esther Evelyne

(56) Documents cités:
- EP-A1- 0 406 766
- US-A- 3 696 598
- US-A- 4 244 163
- US-A1- 2010 031 622

## Description

La présente invention concerne le domaine des machines agricoles et plus particulièrement des faucheuses agricoles et a pour objet une machine agricole du type faucheuse.

Les machines agricoles du type faucheuse permettent de couper la récolte de plantes telles que de l'herbe ou des céréales et sont généralement trainées par un véhicule tracteur ou portées latéralement à l'arrière ou à l'avant d'un véhicule tracteur.

Ces machines agricoles comprennent un bâti supportant un système de coupe formé par une barre de coupe, connue également sous le nom de lamier, s'étendant perpendiculairement ou transversalement à la direction d'avance de la machine au moins lorsque celle-ci est en situation de travail. Une telle barre de coupe comprend souvent des outils de coupe du type rotors de coupe entrainés en rotation autour d'axes de rotor respectifs parallèles entre eux.

On connait également des machines agricoles du type faucheuse qui comprennent en outre un convoyeur monté à l'arrière de la barre de coupe de sorte à récupérer la récolte coupée par ladite barre de coupe et à la transporter transversalement à la direction d'avance.

Une telle machine agricole du type faucheuse est connue du document DE 102012000301 divulguant un convoyeur monté à l'arrière de la barre de coupe du type convoyeur à vis sans fin.

Toutefois, les convoyeurs à vis sans fin sur ce type de machine agricole présentent de nombreux inconvénients : poids important nécessitant une structure de liaison lourde et beaucoup de puissance ; rotation vers le bas de la vis sans fin impliquant l'entraînement de la récolte dans le sens opposé à celui généré par les rotors de coupe (vers le haut) générant des turbulences dans le flux de la récolte à l'arrière du lamier et faisant refluer une partie de la récolte vers l'avant des rotors, ce qui diminue la qualité de coupe desdits rotors ; lors de sa rotation autour de l'âme de la vis sans fin, la récolte est vrillée (forme une torsade), ce qui engendre des difficultés à régler l'alimentation de la récolte lors de son ramassage par une machine équipée d'un pickup comme les presses et ensileuses conventionnelles.

D'autres machines agricoles du type faucheuse connues permettent de résoudre au moins une partie des inconvénients des convoyeurs à vis sans fin en utilisant à la place un convoyeur à bande et un dispositif de conditionnement. La machine comprend un châssis supportant alors successivement, depuis l'avant vers l'arrière de la machine en considérant la direction d'avance de cette dernière en situation de travail, la barre de coupe, le dispositif de conditionnement et le convoyeur à bande. Une telle machine agricole est connue du document EP 0406766.

Ce document EP 0406766 divulgue une machine du type faucheuse conditionneuse comportant barre de coupe du type à disques de coupe rotatifs et un convoyeur présentant une surface sensiblement plane et étant monté à l'arrière de la machine pour recevoir et supporter la récolte (herbe fauchée) et pour transporter cette dernière vers un côté de la machine. Le convoyeur peut pivoter autour de pivots horizontaux depuis une position de travail vers une position de repos relevée surplombant la position de travail. Le convoyeur comprend un élément de transport formé par une large bande de caoutchouc renforcée de lattes transversales et passant sans fin sur des rouleaux d'extrémité animés chacun en rotation autour d'un axe. La machine comprend en outre un dispositif de conditionnement disposé à l'arrière de la barre de coupe et un capot au-dessus dudit dispositif, agencés de sorte que la récolte coupée par la barre de coupe est reçue, en provenance de celle-ci, par le dispositif de conditionnement. Dans la position de travail, le convoyeur est incliné de 10 à 40° par rapport à l'horizontale de sorte que son côté arrière est plus haut que son côté avant. Par rapport aux axes des disques de coupe sensiblement verticaux, voire légèrement inclinés vers l'avant, les axes des rouleaux d'extrémité sont donc inclinés vers l'arrière et notamment de plus de 45° vers l'arrière, en vue latérale.

Toutefois dans une machine agricole du type de celle divulguée par le document EP 0406766, le dispositif de conditionnement nécessite un système d'entraînement pour l'entraîner alourdissant et allongeant la machine (selon la direction d'avance), ce qui réduit sa manoeuvrabilité. En outre, dans le cas où une telle machine est portée, une telle longueur implique également un effort de porte à faux important en situation de transport. D'autre part, des pertes de récolte sont à prévoir par le dessous entre la barre de coupe et le convoyeur. Enfin, la récolte glisse sur la bande de convoyage et est entraînée par paquet, ce qui a pour effet de créer un andain irrégulier pouvant provoquer des bourrages lors de son ramassage, ainsi que des restes de récolte sur le sol après ramassage. Le document US 3 696 598 A divulgue une machine agricole comprenant les caractéristiques selon le préambule de la revendication 1.

La présente invention a pour but de pallier ces inconvénients en proposant une machine agricole du type faucheuse présentant un poids réduit, nécessitant ainsi peu de puissance et une consommation énergétique faible.

A cet effet, la machine agricole du type faucheuse, selon la présente invention, selon l'objet de la revendication 1, se déplaçant dans une direction d'avance en situation de travail et comprenant un bâti supportant d'une part, une barre de coupe comportant des rotors de coupe entraînés en rotation autour d'axes respectifs parallèles entre eux et, d'autre part, un convoyeur à bande comportant une bande sans fin entrainée en déplacement et guidée entre deux rouleaux animés en rotation autour de leur axe grâce à un moyen d'entraînement d'au moins l'un desdits rouleaux, ladite bande présentant un brin de transport tourné vers l'avant et un brin de retour tourné vers l'arrière, ledit convoyeur étant disposé derrière la barre de coupe de sorte à récupérer, sur ledit brin de transport, la récolte coupée par la barre de coupe et à la déplacer transversalement à ladite direction d'avance, se caractérise essentiellement en ce que les axes des rouleaux du convoyeur sont sensiblement parallèles aux axes des rotors de coupe, en ce qu'elle comprend un écran de collecte, de préférence solidaire du convoyeur à bande, s'étendant au moins partiellement sous ce dernier et vers la barre de coupe en étant accolé à cette dernière et en ce qu'un espace formant un canal de convoyage transversal est ménagé au-dessus dudit écran de collecte entre ledit brin de transport de la bande et la barre de coupe, et en ce qu'elle comprend un déflecteur supérieur s'étendant au-dessus de la barre de coupe et du brin de transport la bande.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente une vue de dessus de la machine agricole selon la présente invention attelée par son extrémité interne à l'arrière d'un véhicule tracteur en s'étendant transversalement à la direction d'avance,
[Fig. 2] représente une vue en coupe transversale partielle de la machine représentée sur la figure 1,
[Fig. 3] représente une vue en perspective de la machine telle que représentée sur la figure 2,
[Fig. 4] représente une vue en perspective du convoyeur à bande de la machine représentée sur la figure 1,
[Fig. 5] représente une vue en perspective partielle de la machine représentée sur la figure 1, du côté de son extrémité interne, vue de dessus,
[Fig. 6] montre la machine représentée sur la figure 5, vue de trois quart.

Les figures montrent une machine agricole du type faucheuse, selon la présente invention, se déplaçant dans une direction d'avance A en situation de travail et comprenant un bâti 1 supportant d'une part, une barre de coupe 2 comportant des rotors de coupe 2a entraînés en rotation autour d'axes 20a respectifs parallèles entre eux et, d'autre part, un convoyeur 3 à bande comportant une bande 3a sans fin entrainée en déplacement et guidée entre deux rouleaux 3b animés en rotation autour de leur axe 30b grâce à un moyen d'entraînement 3c d'au moins l'un desdits rouleaux 3b. La bande 3a présente un brin de transport 30a tourné vers l'avant et un brin de retour 31a tourné vers l'arrière. Le convoyeur 3 est disposé derrière la barre de coupe 2 de sorte à récupérer, sur ledit brin de transport 30a, la récolte coupée par la barre de coupe 2 et à la déplacer transversalement à ladite direction d'avance A.

On comprend que le brin de transport 30a correspond à la partie rectiligne de la bande 3a tournée vers l'avant c'est à dire vers ou faisant face à la barre de coupe 2. Le brin de retour 31a correspond à la partie rectiligne de la bande 3a tournée vers l'arrière.

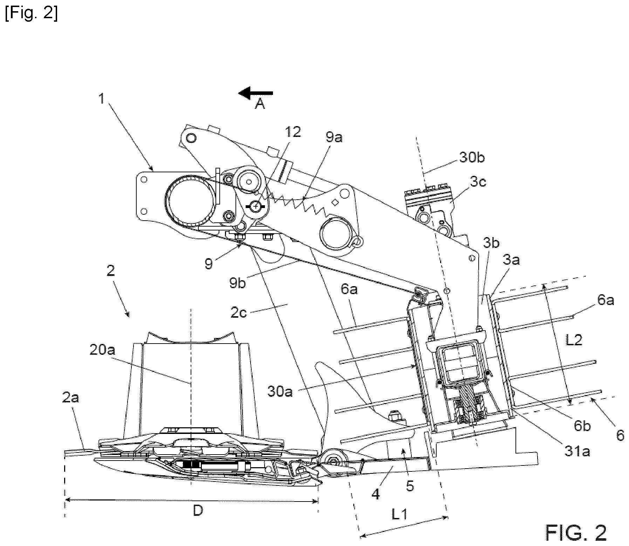

Conformément à la présente invention, les axes 30b des rouleaux 3b du convoyeur 3 sont sensiblement parallèles aux axes 20a des rotors de coupe 2a. On comprend que les axes 30b des rouleaux 3b peuvent être parallèles aux axes 20a des rotors de coupe 2a ou, comme on peut le voir sur la figure 2, inclinés vers l'avant selon un angle inférieur à 40°, plus préférentiellement inférieur à 25°, et plus préférentiellement encore inférieur à 10° par rapport à ces derniers.

Toujours conformément à la présente invention, une telle machine comprend en outre un écran de collecte 4 s'étendant au moins partiellement sous le convoyeur à bande 3 et vers la barre de coupe 2 en étant accolé à cette dernière. Un espace formant un canal de convoyage 5 transversal est ménagé au-dessus dudit écran de collecte 4 entre le brin de transport 30a de la bande 3a et la barre de coupe 2. De préférence, l'écran de collecte 4 est solidaire du convoyeur à bande 3.

De préférence, l'écran de collecte 4 s'étend entre l'arrière de la barre de coupe 2 et le brin de transport 30a de la bande 3a.

On entend par écran de collecte 4 accolé à la barre de coupe 2, un écran de collecte 4 réuni à, en contact avec, proche de, juxtaposé à ou solidaire de la barre de coupe 2.

Grâce au fait que l'écran de collecte 4 est accolé à la barre de coupe 2, c'est à dire accolé à l'arrière de cette dernière, aucun dispositif additionnel (de conditionnement) n'est nécessaire pour transférer la récolte entre les rotors de coupe 2a et le convoyeur 3 sans risque de perte ni de salissure de la récolte. Contrairement aux faucheuses à convoyeur à bande connues dont les axes de rouleau sont orientés sensiblement horizontalement, la machine selon l'invention est dépourvue de dispositif de conditionnement soulevant la récolte depuis la barre de coupe 2, connue également sous le nom de lamier, vers la bande du convoyeur. En outre, le fait d'accoler ou de juxtaposer la barre de coupe 2 au convoyeur 3 permet de réduire l'encombrement de la machine selon la direction d'avance A, facilitant ainsi la manoeuvrabilité de ladite machine en situation/configuration de travail et de transport. Ainsi qu'il ressort de la figure 2 notamment, chaque rotor de coupe 2a comporte un disque et au moins deux (2) couteaux, chacun étant monté pivotant sur ledit disque autour d'un axe sensiblement parallèle à l'axe 20a du rotor de coupe 2a respectif. De préférence, l'écran de collecte 4 se situe, en vue latérale, entre la surface d'appui de la barre de coupe 2 et le plan de coupe passant par les couteaux des rotors de coupe 2a et orienté perpendiculairement à leurs axes 20a.

Une bande 3a entrainée en déplacement et guidée entre deux rouleaux 3b animés en rotation autour d'axes 30b parallèles aux axes 20a des rotors de coupe 2a permet, via son brin de transport 30a, d'éviter l'intrusion de récolte entre les brins de transport 30a et de retour 31a et donc un potentiel enroulement de végétaux contenus dans la récolte autour des rouleaux 3b. De plus, lorsque le flux de récolte généré par les rotors de coupe 2a entre en contact avec le brin de transport 30a de la bande 3a, il est directement entrainé latéralement, la récolte se retrouvant ainsi moins en paquets ce qui permet d'aboutir à des andains plus homogènes et à un séchage plus régulier. De préférence, le brin de transport 30a représente plus de 50%, et plus préférentiellement plus de 75%, de la paroi arrière du canal de convoyage 5.

En outre, l'écran de collecte 4 est orienté sensiblement horizontalement de manière à éviter tout glissement de récolte vers les rotors de coupe 2a, et à faciliter l'accroche et l'entrainement de la récolte par le brin de transport 30a de la bande 3a et ses éléments ameneurs 6a. De préférence, l'écran de collecte 4 forme un angle avec le plan contenant les axes 20a des rotors de coupe 2a compris entre 5 et 20°, et plus préférentiellement entre 10 et 15°.

De préférence, la machine agricole du type faucheuse est attelée à un véhicule V porteur ou tracteur via un dispositif d'attelage 13. L'extrémité latérale du convoyeur 3 située la plus proche du dispositif d'attelage 13 est son extrémité interne. Les rouleaux 3b sont situés aux extrémités du convoyeur 3. La bande 3a pourrait cependant aussi être guidée par au moins un rouleau additionnel.

Le convoyeur 3 peut être configuré pour pouvoir passer d'une position active ou fonctionnelle à une position escamotée non fonctionnelle. Dans la position active ou fonctionnelle, les axes 30b des rouleaux 3b du convoyeur 3 sont, comme décrits précédemment, sensiblement parallèles aux axes 20a des rotors de coupe 2a. Dans la position escamotée non fonctionnelle, l'arrière des rotors de coupe 2a est dégagé, de préférence au moins sur une hauteur égale à la largeur L2 de la bande 3a. Afin de passer de la position escamotée à la position active, le convoyeur 3 est de préférence pivoté autour d'un axe d'escamotage 12 sensiblement horizontal.

Dans un mode de réalisation préférentiel, une telle machine comprend en outre un dispositif ameneur 6 fixé sur la face externe de la bande 3a en étant ainsi solidaire en déplacement de cette dernière. Le dispositif ameneur 6 comprend des éléments ameneurs 6a de forme allongée et fixés sur ladite bande 3a. De préférence, les éléments ameneurs 6a sont fixés sur la bande 3a par l'une de leurs extrémités, dite extrémité de fixation. L'extrémité libre d'un élément ameneur 6a est la plus éloignée de la bande 3a. Ces éléments ameneurs 6a s'étendent sur une longueur L1 prédéterminée en projection sur un plan vertical et parallèle à la direction d'avance A.. Ils s'étendent transversalement à ladite face externe. Les éléments ameneurs 6a s'étendent préférentiellement orthogonalement au plan passant par les axes 30b des rouleaux 3b, au moins au niveau de leur extrémité de fixation. Les éléments ameneurs 6a sont de préférence répartis sur toute la longueur de la boucle formée par la bande 3a sans fin. L'écran de collecte 4 se situe préférentiellement en dessous des éléments ameneurs 6a du brin de transport 30a.

La longueur L1 de chaque élément ameneur 6a est déterminée selon une projection dudit élément ameneur 6a sur un plan perpendiculaire aux axes 30b des rouleaux 3b.

On comprend que dans le cas où la présente invention prévoit que les éléments ameneurs 6a s'étendent orthogonalement au plan passant par les axes 30b des rouleaux 3b, il s'agit, en tenant compte du déplacement de la bande 3a, des éléments ameneurs 6a se trouvant sur le brin de transport 30a de la bande 3a, voire du brin de retour 31a (parallèle audit brin de transport).

Grâce à l'orientation des axes 30b des rouleaux 3b du convoyeur 3 sensiblement parallèlement aux axes 20a des rotors de coupe 2a, et à l'orientation des éléments ameneurs 6a transversalement à la face externe de la bande 3a sans fin ou au moins partiellement parallèlement à la direction d'avance A, le convoyeur 3 n'entraine pas la récolte vers le bas. La récolte n'est ainsi pas rabattue vers les rotors de coupe 2a. Le risque de reflux de récolte à l'avant des rotors de coupe 2a, c'est-à-dire que les rotors entrainent à nouveau la récolte vers l'avant, est ainsi diminué. La qualité de coupe est alors améliorée. En outre, un tel convoyeur 3 n'implique pas le vrillage de l'andain, et permet une gestion facilitée du régime d'alimentation de la machine de ramassage équipée, par exemple, d'un pickup, c'est-à-dire un dispositif frontal de ramassage comportant des doigts de râtelage entrainés en rotation selon un axe horizontal.

De préférence, chaque élément ameneur 6a peut consister en une tige mince, étroite ou filiforme sur toute ou une partie de sa longueur L1, au moins au niveau de son extrémité libre. Chaque élément ameneur 6a peut notamment être de section circulaire au niveau de son extrémité libre, avec un diamètre compris, par exemple, entre 5 et 25 millimètres. Cette caractéristique a pour effet d'ajourer davantage le dispositif ameneur 6 dans le canal de convoyage 5 et a ainsi pour avantage de diminuer ou réduire fortement tout effet de ventilation susceptible d'être créé par de tels éléments ameneurs 6a ne présentant pas cette caractéristique et qui aurait tendance à éloigner la récolte du convoyeur 3, diminuant le pouvoir d'accroche de ce dernier et risquant de faire refluer la récolte vers l'avant des rotors de coupe 2a. L'emploi d'éléments ameneur 6a en forme de tige mince, étroite ou filiforme permet ainsi d'améliorer la qualité de la coupe.

Dans ce type de machine agricole, chaque rotor de coupe 2a présente un diamètre D prédéterminé de sa trajectoire extérieure.

La longueur L1 d'au moins un élément ameneur 6a est d'au moins le huitième du diamètre D de la trajectoire extérieure d'un rotor de coupe 2a. Préférentiellement, la longueur L1 d'au moins un élément ameneur 6a est d'au moins le sixième, plus préférentiellement d'au moins lequart, et plus préférentiellement encore d'au moins la moitié du diamètre D de la trajectoire extérieure d'un rotor de coupe 2a. De préférence, la longueur L1 de la majorité des éléments ameneurs 6a est supérieure au huitième, préférentiellement au sixième, plus préférentiellement au quart, et plus préférentiellement encore supérieure à la moitié du diamètre D de la trajectoire extérieure d'un rotor de coupe 2a. Cette caractéristique de longueur présente l'avantage, qu'à régime de rotation constant, plus les éléments ameneurs 6a sont longs, plus la force d'éjection de la récolte est grande, la vitesse tangentielle augmentant avec le rayon, ce qui permet ainsi de déposer la récolte à une distance latéralement plus importante, offrant plus de flexibilité quant à l'emplacement de l'andain. En outre, plus les éléments ameneurs 6a sont longs, plus la quantité de récolte entraînée est grande. Un autre avantage est que la section du canal de convoyage 5 peut être plus grande, réduisant ou évitant ainsi le risque de bourrages dans ledit canal de convoyage 5, nécessitant une intervention manuelle, et ralentissant ainsi le chantier agricole. De la même manière, la dimension du diamètre D de la trajectoire extérieure d'un rotor de coupe 2a est en cela déterminante que plus elle est importante, plus la force d'éjection de la récolte vers l'arrière par les rotors de coupe 2a sera importante.

Selon une caractéristique additionnelle, le ou les élément(s) ameneur(s) 6a situé(s) au niveau le plus bas du brin de transport 30a présente(nt) une longueur L1 prédéterminée de sorte que l'extrémité libre de cet ou ces élément(s) ameneur(s) 6a le(s) plus bas du brin de transport 30a soit située à proximité de l'extrémité arrière de la barre de coupe 2 ou des rotors de coupe 2a. De préférence le ou les élément(s) ameneur(s) 6a le(s) plus bas se situe(nt), en projection sur un plan parallèle à la direction d'avance A et perpendiculaire aux axes 20a des rotors de coupe 2a, par rapport à l'extrémité arrière de la barre de coupe 2 ou des rotors de coupe 2a, à une distance inférieure à 5 centimètres, et de préférence inférieure à 2 centimètres. Également, les éléments ameneurs 6a dont les extrémités libres sont les plus proches des rotors de coupe 2a se situent, en projection sur un plan vertical et parallèle à la direction d'avance A, à une distance des rotors de coupe 2a inférieure au tiers du diamètre D de la trajectoire extérieure d'un rotor de coupe 2a. Préférentiellement, les éléments ameneurs 6a les plus bas du brin de transport 30a se situent, en projection sur un plan parallèle à la direction d'avance A et aux axes 20a des rotors de coupe 2a, à une distance des rotors de coupe 2a inférieure inférieur au sixième, et plus préférentiellement inférieur au huitième, du diamètre D de la trajectoire extérieure d'un rotor de coupe 2a, respectivement du plus petit rotor de coupe 2a, le cas échéant. Cette caractéristique de proximité, qui implique une zone morte peu étendue, a pour avantage de créer un risque faible d'accumulation de récolte entre la barre de coupe 2 et le convoyeur 3. Une telle accumulation de récolte peut entrainer une dépose de la récolte par le convoyeur 3 à des endroits non désirés et/ou un mauvais positionnement de l'andain. Le fait d'éviter l'accumulation de récolte entre la barre de coupe 2 et le convoyeur 3 permet d'éviter un ralentissement du flux de récolte provenant des rotors de coupe 2a et d'éviter de former des paquets, résultant en un andain plus homogène, donc plus facile à récolter et/ou dont le séchage sera plus régulier aboutissant à une meilleure qualité de fourrage. De plus, grâce à la longueur L1 relativement importante d'au moins certains éléments ameneurs 6a la section du canal de convoyage 5 reste importante impliquant peu de risque de bourrage.

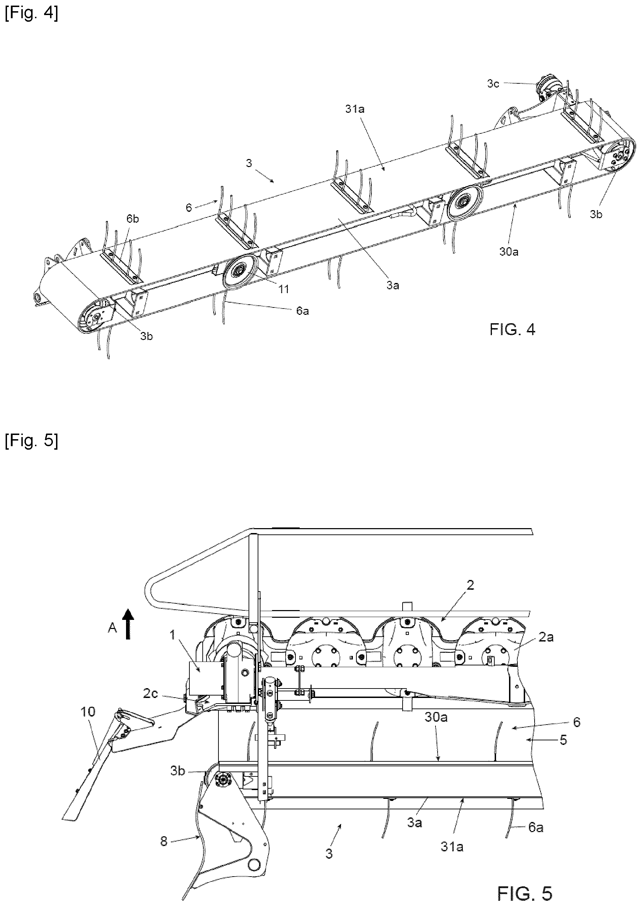

Il est également possible de caractériser l'étendue réduite de la zone morte entre la barre de coupe 2 et le convoyeur 3 en décrivant la proportion de la zone située entre les rotors 2a et le brin de transport 30a balayée par les éléments ameneurs 6a. Ainsi qu'il est visible sur la figure 5 notamment, la zone s'étendant depuis l'arrière des rotors 2a jusqu'au brin de transport 30a est ainsi balayée à plus de 60% par les éléments ameneurs 6a. Dans le mode de réalisation préféré, la zone s'étendant depuis l'arrière des rotors 2a jusqu'au brin de transport 30a est balayée à plus de 75% et plus préférentiellement à plus de 90% par les éléments ameneurs 6a. Grâce à cette proximité entre le convoyeur 3 et la barre de coupe 2 et au flux de récolte généré par la rotation des rotors 2a, la récolte ne peut pas ou moins s'accumuler dans cette zone, évitant ainsi la formation de paquets et un acheminement irrégulier de récolte. Les andains résultants sont alors plus réguliers et le séchage plus homogène.

Il ressort également de la figure 5 que le brin de transport est sensiblement perpendiculaire à la direction d'avance A, en vue suivant les axes 30b des rouleaux 3b, de sorte à éviter une accumulation de récolte immobile qui ralentit le flux de récolte et peut provoquer un acheminement de la récolte par paquets, qui, lorsqu'ils atteignent le convoyeur 3, engendrent des andains irréguliers et un séchage hétérogène de la récolte. Une accumulation trop importante de récolte immobile peut également provoquer des bourrages à l'intérieur du canal de convoyage 5, nécessitant des interventions importunes additionnelles.

Dans une variante de réalisation non représentée, le brin de transport 30a forme, en vue suivant les axes 30b des rouleaux 3b, un angle avec la direction d'avance A inférieur à 90°. Dans ce cas, la distance entre les éléments ameneurs 6a les plus bas du brin de transport 30a et les rotors de coupe 2a à considérer est la moyenne de tous les éléments ameneurs 6a du brin de transport 30a. Selon une autre variante non représentée, les trajectoires D des rotors de coupe 2a se situent entre deux lignes d'éléments ameneurs 6a en vue latérale.

Ainsi, le convoyeur 3 peut être disposé directement derrière la barre de coupe 2, la machine 1 ne comportant pas de rouleau entrainé autour d'un axe horizontal de sorte à entrainer la récolte dans le sens opposé à la direction d'avance (A). En effet, aucun dispositif, additionnel ou non, hormis les rotors de coupe 2a, n'entraine la récolte dans la direction opposée à la direction d'avance A. Notamment, aucun rouleau n'est monté entre la barre de coupe 2 et le convoyeur 3. En effet, grâce à la longueur L1 d'au moins certains éléments ameneurs 6a, à l'entrainement des rotors de coupe 2a et à la proximité des rotors 2a avec les ou au moins certains éléments ameneurs 6a, un tel dispositif n'est pas nécessaire. Le fait de se passer d'un tel dispositif permet d'alléger et de raccourcir la machine selon la direction d'avance A. Enfin, un avantage d'un convoyeur 3 comportant une bande 3a selon l'invention, par rapport à un convoyeur à rouleau(x) entrainé autour d'un axe transversal à la direction d'avance A, est que les végétaux longs contenus dans la récolte n'auront pas ou moins tendance à s'enrouler autour du ou des rouleau(x), évitant des frottements et une surconsommation en énergie liée à ces frottements, voire le blocage de la rotation du ou des rouleaux, pouvant induire des dégâts et une perte de temps importante pour la remise en état.

Selon une autre caractéristique additionnelle, la présente invention peut prévoir qu'au moins le tiers, de préférence au moins la moitié, de la longueur L1 d'un élément ameneur 6a forme avec la bande 3a, en vue selon les axes 30b des rouleaux 3b, un angle d'attaque inférieur à 90°, de préférence inférieure à 75°. Cette caractéristique a pour avantage de réduire ainsi la part de la récolte entraînée à l'arrière de la bande 3a, ce sans articulation des éléments ameneurs 6a avec la bande 3a. En effet, la part de la récolte entrainée au niveau du brin de retour 31a risque d'être déposée derrière la machine, réduisant la qualité du travail et induisant des pertes de récolte.

Dans une forme de réalisation préférentielle de la disposition ou de l'arrangement des éléments ameneurs 6a sur la bande 3a, ceux-ci sont arrangées sur la face externe 30 de ladite bande 3a en rangées s'étendant parallèlement aux axes 30b des rouleaux 3b. Les éléments ameneurs 6a d'une même rangée s'étendent préférentiellement sur la majorité de la largeur L2 de la bande 3a. De préférence, Les éléments ameneurs 6a de la bande 3a sont également répartis selon au moins trois (3) lignes horizontales ou parallèles au sol, et de préférence sur quatre (4) lignes, permettant d'assurer un bon entrainement de la récolte et d'éviter ainsi des bourrages.

Dans une forme de réalisation préférentielle du dispositif ameneur 6 permettant de fixer plus solidement les éléments ameneurs 6a sur la bande 3a tout en leur conférant de la souplesse, celui-ci peut comprendre une pluralité de bases de fixation 6b, de préférence présentant chacune la forme d'une pâle. La ou chaque base de fixation 6b est préférentiellement allongée et fixée sur la face externe de la bande 3a et peut s'étendre sur toute ou quasiment toute la largeur L2 de la bande 3a. La ou chaque base de fixation 6b est préférentiellement réalisée avec le même matériau que celui de la bande 3a. Chaque rangée d'éléments ameneur 6a peut alors comprendre l'une desdites bases de fixation 6b. Les éléments ameneurs 6a sont alors fixés, par leur extrémité de fixation, sur la bande 3a par l'intermédiaire desdites bases de fixation 6b respectives. Chaque base de fixation 6b peut préférentiellement présenter une épaisseur supérieure au quadruple de l'épaisseur de la bande 3a de sorte à apporter une solidité accrue à la fixation des éléments ameneurs 6a avec la bande 3a.

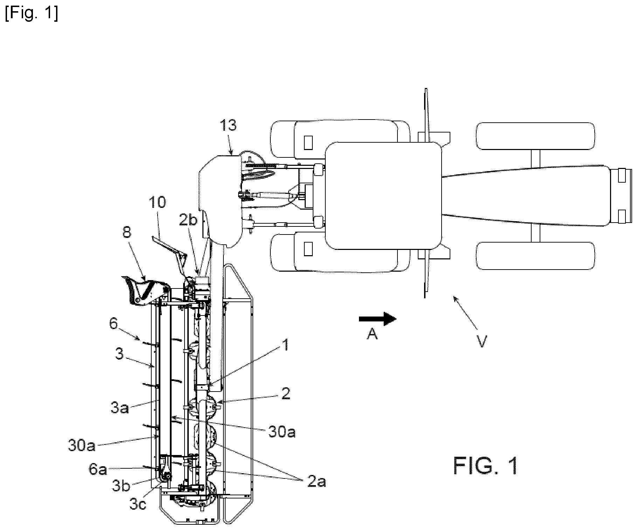

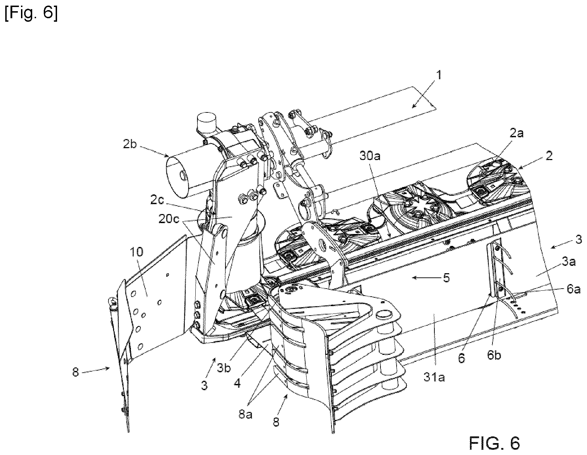

De préférence, comme on peut le voir sur les figures 1, 5 et 6, la machine agricole selon la présente invention peut comprendre en outre un peigne 8 s'étendant le long d'un axe sensiblement parallèle aux axes 30b des rouleaux 3b du convoyeur 3, au moins partiellement en arrière des rouleaux 3b du convoyeur 3 et au niveau de l'extrémité interne du convoyeur 3. Le peigne 8 comporte des dents 8a en forme de lames, droites ou incurvées. De préférence, les dents 8a s'étendent principalement selon la direction d'avance A. Les dents 8a sont espacées les unes des autres, selon la direction des axes 30b des rouleaux 3b du convoyeur 3. Un tel espacement entre les dents permet de laisser passer les éléments ameneurs 6a entre lesdites dents 8a lors du déplacement de la bande 3a. Un tel peigne 8 a pour avantage d'éviter que la récolte soit déposée à l'arrière du convoyeur 3, évitant ou limitant ainsi la perte de fourrage, ce sans articulation des éléments ameneurs 6a avec la bande 3a. Dans un mode de réalisation alternatif non représenté, afin d'éviter toute accroche de récolte au niveau des dents 8a, le peigne 8 peut également être entrainé en rotation autour d'un axe parallèle à l'axe 30b des rouleaux 3b. De préférence, afin d'éviter l'entrainement de récolte à l'arrière de la bande 3a, le peigne 8 est entrainé en rotation dans le sens contraire des rouleaux 3b.

De préférence, pour obtenir un encombrement réduit, un poids moindre et une puissance nécessaire à l'entraînement de la bande 3a plus faible, la largeur L2 de la bande 3a est inférieure au trois quart du diamètre D de la trajectoire extérieure d'un rotor de coupe 2a. Préférentiellement la largeur L2 de la bande 3a est inférieure au deux tiers, et plus préférentiellement sensiblement égale à la moitié, du diamètre D de la trajectoire extérieure d'un rotor de coupe 2a. On comprend que la largeur L2 de la bande 3a correspond à sa dimension selon les axes 30b des rouleaux 3b du convoyeur 3. En d'autres termes, la largeur L2 correspond à la hauteur de la bande 3a.

De préférence, pour obtenir un entraînement plus rapide de la bande 3a et éviter ou limiter davantage les problèmes de bourrage, la largeur L2 de la bande 3a est supérieure au quart du diamètre D de la trajectoire extérieure d'un rotor de coupe 2a. Préférentiellement, la largeur L2 de la bande 3a est supérieure au tiers du diamètre D de la trajectoire extérieure d'un rotor de coupe 2a.

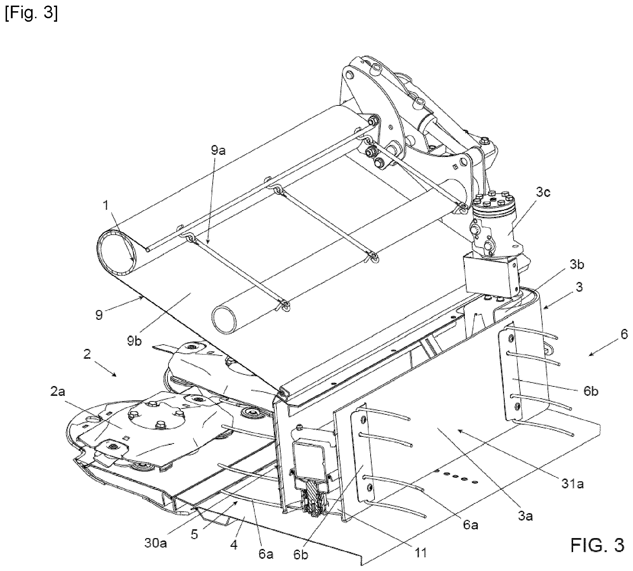

D'autre part, en se référant notamment aux figures 2 et 3, pour réduire les pertes de récolte tout en limitant l'intrusion de végétaux entre les rouleaux 3b du convoyeur 3, la présente invention peut prévoir que la machine agricole comprenne en outre un déflecteur 9 supérieur s'étendant au-dessus de la barre de coupe 2 et au-dessus du brin de transport 30a de la bande 3a. Plus précisément, le canal de convoyage 5 est borné en bas par l'écran de collecte 4, devant par les rotors de coupe 2a, derrière par le brin de transport 30a de la bande 3 et au-dessus par le déflecteur 9. Une telle canalisation de la récolte, après éjection par les rotors de coupe 2a, permet d'éviter des pertes de récolte et de maintenir propre d'une part la parcelle sur laquelle la récolte est fauchée et l'espace entre les brins de transport 30a et de retour 31a.

Dans une forme de réalisation préférentielle du déflecteur 9 supérieur, celui-ci peut comporter des moyens extensibles 9a au moins selon une direction parallèle à la direction d'avance A. Les moyens extensibles 9a sont de préférence reliés au bâti 1. Le déflecteur 9 ne doit ainsi pas être démonté lorsque le convoyeur 3 passe de la position active à la position escamotée. Il est de préférence réalisé à partir de ou constitué par une toile souple 9b. Le déflecteur 9 supérieur s'étend de préférence sur toute la longueur, ou au moins une majorité de la longueur, du convoyeur 3.

D'autre part, comme on peut le voir notamment sur les figures 1 et 2, afin de pouvoir faire varier, au moyen d'une commande, la vitesse de rotation de la bande 3a du convoyeur 3 indépendamment de celle des rotors de coupe 2a et sans nécessiter de démonter des éléments constitutifs de la machine agricole tels que le convoyeur 3, la présente invention peut prévoir que le moyen d'entraînement 3c du convoyeur 3 soit distinct du moyen d'entraînement 2b de la barre de coupe 2. La commande peut être située sur la machine agricole ou, préférentiellement, sur le véhicule V porteur ou tracteur auquel est reliée la machine agricole. Le moyen d'entraînement 2b de la barre de coupe 2a peut être, comme c'est le cas généralement dans les machines connues, la prise de puissance du véhicule V reliée à la barre de coupe 2a par une ligne d'entrainement comportant des arbres télescopiques et/ou à cardans. Le moyen d'entraînement 2b de la barre de coupe 2a pourrait cependant aussi être un moteur hydraulique dont la source en huile pressurisée provient du véhicule V porteur ou tracteur.

La barre de coupe 2 comprend deux extrémités opposées entre lesquelles elle s'étend, à savoir une extrémité interne et une extrémité externe plus éloignée du dispositif d'attelage 13. En outre, dans une forme préférentielle de la barre de coupe 2, celle-ci est suspendue au bâti 1 par l'intermédiaire de jambes 2c. Au moins une jambe 2c interne est située à proximité de ladite extrémité interne. De préférence, la barre de coupe 2 est également suspendue au bâti 1 par une jambe externe située à proximité de ladite extrémité externe. D'autre part, la jambe 2c interne peut comporter une surface interne 20c orientée entre 30° et 60°, préférentiellement environ à 45°, par rapport à la direction d'avance A. Du fait que cette surface interne 20c est sensiblement tangente à la trajectoire des extrémités libres des éléments ameneurs 6a, elle participe au guidage du flux de récolte, évitant ainsi l'accrochage de brins de récolte sur cette jambe 2c interne et, après accumulation, de réduire la section de sortie du canal de convoyage 5. Cette réduction du canal de convoyage peut entrainer une dépose de la récolte à des endroits non désirés et/ou un mauvais positionnement de l'andain. Grâce à l'orientation de cette surface interne 20c, la jambe 2c interne permet non seulement le soutien structurel de la barre de coupe 2, mais aussi de guider le flux de récolte et d'améliorer ainsi son positionnement par rapport au convoyeur 3.

Si on se réfère aux figures 1, 5 et 6, on peut voir que la présente invention peut également prévoir que la machine agricole comprenne en outre une tôle 10 à andain. Une telle tôle 10 s'étend latéralement par rapport à la barre de coupe 2a, préférentiellement sensiblement à 45° avec la direction d'avance A. De préférence, la tôle 10 peut s'étendre de part et d'autre de la jambe 2c interne, permettant d'éviter des pertes de fourrages depuis le rotor de coupe 2a interne et de calibrer l'andain. Au moins une partie de la tôle 10 est orientable par rapport à la direction d'avance A, ce qui permet de déplacer l'emplacement de l'andain orthogonalement à la direction d'avance A.

Par ailleurs, en se référant plus particulièrement à la figure 3, on peut voir que, de manière à soutenir la bande 3a, notamment par sa tranche, la machine agricole peut préférentiellement comprendre en outre au moins un élément de guidage 11 situé en dessous de la bande 3a. De préférence, l'élément de guidage 11 est en contact avec la bande 3a de manière à la guider. L'élément de guidage 11 soutient préférentiellement le brin de transport 30a et le brin de retour 31a. Tel que représenté sur la figure 3, l'élément de guidage 11 peut être préférentiellement situé au-dessus de l'écran de collecte 4 lorsque celui-ci s'étend vers l'arrière jusqu'au brin de retour 31a. Le ou chaque élément de guidage 11 peut être prévu pour être guidé en rotation autour d'un axe sensiblement parallèle aux axes 30b des rouleaux 3b du convoyeur 3. La bande 3a risque ainsi moins de frotter sur l'écran de collecte 4, sur toute autre pièce située sous la bande 3a et/ou sur le sol, induisant donc moins d'usure de la bande 3a et une puissance nécessaire moindre.

La bande 3a est préférentiellement flexible. En outre, de préférence, la bande 3a, dite bande 3a non ajourée, ne présente aucune ouverture, ou quasiment pas d'ouvertures, contrairement à une chaine ou certaines courroies qui sont ajourées structurellement. Cette caractéristique permet d'éviter la mise en place d'un écran de collecte supplémentaire à l'arrière, c'est à dire derrière la bande 3a.Au moins le brin de transport 30a de la bande 3a constitue ainsi un moyen de rétention de la récolte évitant les pertes. Un autre avantage est que la bande 3a non ajourée permet de réduire les salissures du moyen d'entraînement 3c d'au moins l'un desdits rouleaux 3b du convoyeur 3, impliquant ainsi moins d'entretien.

Bien entendu, l'invention n'est pas limitée au mode de réalisation décrit et représenté aux dessins annexés. Des modifications restent possibles, notamment du point de vue de la constitution des divers éléments, sans sortir pour autant du domaine de protection de l'invention selon les revendications annexées .

## Revendications

1. Machine agricole du type faucheuse se déplaçant dans une direction d'avance (A) en situation de travail et comprenant un bâti (1) supportant d'une part, une barre de coupe (2) comportant des rotors de coupe (2a) entraînés en rotation autour d'axes (20a) respectifs parallèles entre eux et, d'autre part, un convoyeur (3) à bande comportant une bande (3a) sans fin entrainée en déplacement et guidée entre deux rouleaux (3b) animés en rotation autour de leur axe (30b) grâce à un moyen d'entraînement (3c) d'au moins l'un desdits rouleaux (3b), ladite bande (3a) présentant un brin de transport (30a) tourné vers l'avant et un brin de retour (31a) tourné vers l'arrière, ledit convoyeur (3) étant disposé derrière la barre de coupe (2) de sorte à récupérer, sur ledit brin de transport (30a), la récolte coupée par la barre de coupe (2) et à la déplacer transversalement à ladite direction d'avance (A), les axes (30b) des rouleaux (3b) du convoyeur (3) étant sensiblement parallèles aux axes (20a) des rotors de coupe (2a), la machine comprenant en outre un écran de collecte (4), de préférence solidaire du convoyeur à bande (3), s'étendant au moins partiellement sous ce dernier et vers la barre de coupe (2) en étant accolé à cette dernière et en ce qu'un espace formant un canal de convoyage (5) transversal est ménagé au-dessus dudit écran de collecte (4) entre ledit brin de transport (30a) de la bande (3a) et la barre de coupe (2), la machine (1) comprenant en outre un déflecteur (9) supérieur s'étendant au-dessus de la barre de coupe (2) et au-dessus du brin de transport (30a) la bande (3b), la machine comprenant un dispositif ameneur (6) fixé sur la face externe de la bande (3a) en étant solidaire en déplacement de cette dernière, ledit dispositif ameneur (6) comprenant des éléments ameneurs (6a) de forme allongée et fixés sur ladite bande (3a) et s'étendant sur une longueur (L1) prédéterminée en projection sur un plan vertical et parallèle à la direction d'avance (A), machine **caractérisée en ce que** le ou les élément(s) ameneur(s) (6a) situé(s) au niveau le plus bas du brin de transport (30a) présente(nt) une longueur (L1) prédéterminée de sorte que l'extrémité libre de cet ou ces élément(s) ameneur(s) (6a) le(s) plus bas du brin de transport (30a) soit située à proximité de l'extrémité arrière de la barre de coupe (2).

2. Machine agricole selon la revendication 1, **caractérisée en ce que** la longueur (L1) d'au moins un élément ameneur (6a) est d'au moins le huitième du diamètre (D) de la trajectoire extérieure d'un rotor de coupe (2a).

3. Machine agricole selon l'une quelconque des revendications 1 ou 2, **caractérisée en ce que** la zone s'étendant depuis l'arrière des rotors 2a jusqu'au brin de transport 30a est ainsi balayée à plus de 60% par les éléments ameneurs 6a.

4. Machine agricole selon l'une quelconque des revendications 1 à 3, **caractérisée en ce que** le brin de transport est sensiblement perpendiculaire à la direction d'avance A, en vue suivant les axes 30b des rouleaux 3b.

5. Machine agricole selon l'une quelconque des revendications 1 à 4, **caractérisée en ce que** le canal de convoyage 5 est borné en bas par l'écran de collecte 4, devant par les rotors de coupe 2a, derrière par le brin de transport 30a de la bande 3 et au-dessus par le déflecteur 9.

6. Machine agricole selon l'une quelconque des revendications 1 à 5, **caractérisée en ce que** le brin de transport 30a représente plus de 50%, et plus préférentiellement plus de 75%, de la paroi arrière du canal de convoyage 5.

7. Machine agricole selon l'une quelconque des revendications 1 à 6, **caractérisée** que chaque élément ameneur (6a) consiste en une tige mince, étroite ou filiforme sur toute ou une partie de sa longueur (L1), au moins au niveau de son extrémité libre.

8. Machine agricole selon l'une quelconque des revendications 1 à 7, **caractérisée en ce qu'**elle comprend un peigne (8) s'étendant le long d'un axe sensiblement parallèle aux axes (30b) des rouleaux (3b) du convoyeur (3), au moins partiellement en arrière des rouleaux (3b) du convoyeur (3) et au niveau de l'extrémité interne du convoyeur (3), ledit peigne (8) comportant des dents (8a) en forme de lames espacées les unes des autres, selon la direction des axes (30b) des rouleaux (3b) du convoyeur (3)).

9. Machine agricole selon l'une quelconque des revendications 1 à 8, **caractérisée en ce que** la barre de coupe (2) est suspendue au bâti (1) par l'intermédiaire de jambes (2c), au moins une jambe (2c) interne étant située à proximité de l'extrémité interne de la barre de coupe (2), et **en ce que** la jambe (2c) interne comporte une surface interne (20c) orientée entre 30° et 60° par rapport à la direction d'avance (A).

10. Machine agricole selon l'une quelconque des revendications 1 à 9, **caractérisée en ce qu'**elle comprend au moins un élément de guidage (11) situé en dessous de la bande (3a), l'élément de guidage (11) étant en contact avec la bande (3a) de manière à la guider, et l'élément de guidage (11) étant guidé en rotation autour d'un axe sensiblement parallèle aux axes (30b) des rouleaux (3b) du convoyeur (3).

11. Machine agricole selon l'une quelconque des revendications 1 à 10, **caractérisée en ce que** la largeur (L2) de la bande (3a) est inférieure au trois quart du diamètre (D) de la trajectoire extérieure d'un rotor de coupe (2a).

12. Machine agricole selon l'une quelconque des revendications 1 à 11, **caractérisée en ce que** la largeur (L2) de la bande (3a) est supérieure au quart du diamètre (D) de la trajectoire extérieure d'un rotor de coupe (2a).

13. Machine agricole selon l'une quelconque des revendications 1 à 12, **caractérisée en ce que** le convoyeur (3) est disposé directement derrière la barre de coupe (2), **en ce qu'**elle ne comporte pas de rouleau entrainé autour d'un axe horizontal, et **en ce qu'**aucun dispositif, additionnel ou non, hormis les rotors de coupe (2a), n'entraine la récolte dans la direction opposée à la direction d'avance (A).

## Patentansprüche

1. Landwirtschaftliche Maschine des Mäher-Typs, die sich in einer Vorschubrichtung (A) in Arbeitssituationen bewegt und ein Gestell (1) umfasst, das einerseits einen Mähbalken (2) mit Mährotoren (2a), die um i jeweilige, zueinander parallele Achsen (20a) in Drehung versetzt werden, und andererseits eine Bandfördereinrichtung (3) mit einem endlosen Band (3a) trägt, das in Bewegung angetrieben wird und zwischen zwei Rollen (3b) geführt wird, die dank eines Antriebsmittels (3c) mindestens einer der Rollen (3b) zur Drehung um ihre Achse (30b) angetrieben werden, wobei das Band (3a) eine nach vorne gerichtete Förderfläche (30a) und eine nach hinten gerichtete Rückkehrfläche (31a) aufweist, wobei die Fördereinrichtung (3) hinter dem Mähbalken (2) angeordnet ist, um das von dem Mähbalken (2) abgeschnittene Erntegut auf der Förderfläche (30a) aufzunehmen und es quer zur Vorschubrichtung (A) zu bewegen, wobei die Achsen (30b) der Rollen (3b) der Fördereinrichtung (3) im Wesentlichen parallel zu den Achsen (20a) der Mährotoren (2a) sind, wobei die Maschine außerdem eine Sammelfläche (4) umfasst, die vorzugsweise fest mit der Bandfördereinrichtung (3) verbunden ist und sich zumindest teilweise unter dieser und in Richtung des Mähbalkens (2) erstreckt, indem sie in dessen Nähe angeordnet ist und ein Raum, der einen quer verlaufenden Förderkanal (5) bildet, über der Sammelfläche (4) zwischen der Förderfläche (30a) des Bandes (3a) und dem Mähbalken (2) angeordnet ist, wobei die Maschine (1) ferner ein Oberablenkblech (9) umfasst, das sich über dem Mähbalken (2) und über der Förderfläche (30a) des Bandes (3a) erstreckt, wobei die Maschine eine Zuführvorrichtung (6) umfasst, die an der Außenseite des Bandes (3a) befestigt ist, indem sie mit letzterem beweglich fest verbunden ist, wobei die Zuführvorrichtung (6) Zuführelemente (6a) umfasst, die eine längliche Form haben und auf dem Band (3a) befestigt sind und sich über eine vorbestimmte Länge (L1) erstrecken, in der Projektion auf einer vertikalen Ebene parallel zu der Vorschubrichtung (A), Maschine **dadurch gekennzeichnet, dass** das oder die am weitesten unten der Förderfläche (30a) sich befindliche(n) Zuführelement(e) (6a) eine vorbestimmte Länge (L1) aufweist (aufweisen), so dass das freie Ende dieses (dieser) am weitesten unten der Förderfläche (30a) sich befindlichen Zuführelements(e) (6a) in der Nähe des hinteren Endes des Mähbalkens (2) befindet.

2. Landwirtschaftliche Maschine nach Anspruch 1, **dadurch gekennzeichnet, dass** die Länge (L1) von mindestens einem Zuführelement (6a) mindestens ein Achtel des Durchmessers (D) der äußeren Bahn eines Mährotors (2a) beträgt.

3. Landwirtschaftliche Maschine nach irgend einem der Ansprüche 1 oder 2, **dadurch gekennzeichnet, dass** die Zone, die sich von der Rückseite der Rotoren 2a bis zur Förderfläche 30a erstreckt derart zu mehr als 60 % von den Zuführelementen 6a überstrichen wird.

4. Landwirtschaftliche Maschine nach irgend einem der Ansprüche 1 bis 3, **dadurch gekennzeichnet, dass** die Förderfläche in der Ansicht entlang der Achsen 30b der Rollen 3b im Wesentlichen senkrecht zur Vorschubrichtung A verläuft.

5. Landwirtschaftliche Maschine nach irgend einem der Ansprüche 1 bis 4, **dadurch gekennzeichnet, dass** der Förderkanal 5 unten durch die Sammelfläche 4, vorne durch die Mährotoren 2a, hinten durch die Förderfläche 30a des Bandes 3 und oben durch das Ablenkblech 9 begrenzt wird.

6. Landwirtschaftliche Maschine nach irgend einem der Ansprüche 1 bis 5, **dadurch gekennzeichnet, dass** die Förderfläche 30a mehr als 50 % und vorzugsweise mehr als 75 % der Hinterwand des Förderkanals 5 ausmacht.

7. Landwirtschaftliche Maschine nach irgend einem der Ansprüche 1 bis 6, **dadurch gekennzeichnet, dass** jedes Zuführelement (6a) über seine gesamte Länge (L1) oder einen Teil davon, zumindest an seinem freien Ende, aus einem dünnen, schmalen oder fadenförmigen Schaft gebildet ist.

8. Landwirtschaftliche Maschine nach irgend einem der Ansprüche 1 bis 7, **dadurch gekennzeichnet, dass** sie einen Striegel (8) umfasst, der sich entlang einer Achse erstreckt, die im Wesentlichen parallel zu den Achsen (30b) der Rollen (3b) der Fördereinrichtung (3) verläuft, zumindest teilweise hinter den Rollen (3b) der Fördereinrichtung (3) und in der Nähe des Innenendes der Fördereinrichtung (3), wobei der Striegel (8) Zinken (8a) in Form von Klingen aufweist, die in Richtung der Achsen (30b) der Rollen (3b) der Fördereinrichtung (3) voneinander beabstandet sind.

9. Landwirtschaftliche Maschine nach irgend einem der Ansprüche 1 bis 8, **dadurch gekennzeichnet, dass** der Mähbalken (2) über Träger (2c) an dem Gestell (1) aufgehängt ist, wobei mindestens ein Innenträger (2c) in der Nähe des Innenendes des Mähbalkens (2) angeordnet ist, und dadurch, dass der Innenträger (2c) eine Innenfläche (20c) aufweist, die zwischen 30° und 60° in Bezug auf die Vorschubrichtung (A) ausgerichtet ist.

10. Landwirtschaftliche Maschine nach irgend einem der Ansprüche 1 bis 9, **dadurch gekennzeichnet, dass** sie mindestens ein Führungselement (11) umfasst, das unterhalb des Bandes (3a) angeordnet ist, wobei das Führungselement (11) in Kontakt mit dem Band (3a) steht, um es zu führen, und das Führungselement (11) um eine zu den Achsen (30b) der Rollen (3b) der Fördereinrichtung (3) im Wesentlichen parallele Achse drehbar geführt wird.

11. Landwirtschaftliche Maschine nach irgend einem der Ansprüche 1 bis 10, **dadurch gekennzeichnet, dass** die Breite (L2) des Bandes (3a) weniger als drei Viertel des Durchmessers (D) der äußeren Bahn eines Mährotors (2a) beträgt.

12. Landwirtschaftliche Maschine nach irgend einem der Ansprüche 1 bis 11, **dadurch gekennzeichnet, dass** die Breite (L2) des Bandes (3a) mehr als ein Viertel des Durchmessers (D) der äußeren Bahn eines Mährotors (2a) beträgt.

13. Landwirtschaftliche Maschine nach irgend einem der Ansprüche 1 bis 12, **dadurch gekennzeichnet, dass** die Fördereinrichtung (3) direkt hinter dem Mähbalken (2) angeordnet ist und dadurch, dass sie keine um eine horizontale Achse angetriebene Rolle aufweist, die das Erntegut entgegen der Vorschubrichtung (A) mitnimmt.

## Claims

1. Mower-type agricultural machine moving in a direction of advance (A) in a work configuration and comprising a frame (1) carrying on one hand a cutterbar (2) comprising cutting rotors (2a) driven in rotation around respective axes (20a) parallel to one another, and on the other hand, a belt conveyor (3) comprising an endless belt (3a) driven in motion and guided between two rollers (3b) driven in rotation around their axis (30b) by a drive means (3c) of at least one of the said rollers (3b), the said belt (3a) having a conveying surface (30a) facing forward and a return surface (31a) facing back, the said conveyor (3) being arranged behind the cutterbar (2) to collect the harvest cut by the cutterbar (2) on the said conveying surface (30a), and move it transversally to the said direction of advance (A), the axes (30b) of the rollers (3b) of the conveyor (3) being substantially parallel to the axes (20a) of the cutting rotors (2a), the machine additionally comprising a collecting shield (4), preferably rigidly fastened to the belt conveyor (3), extending at least partially under the latter and towards the cutterbar (2) by being adjacent to the latter; a space forming a transverse conveyor channel (4) being provided above the said collecting shield (4) between the said conveying surface (30a) of the belt (3a) and the cutterbar (2), the machine (1) furthermore comprising an upper deflector (9) extending above the cutterbar (2) and above the conveying surface (30a) of the belt (3b), the machine comprising a feeder device (6) fastened on the outer surface of the belt (3a), thus being rigidly attached in motion to the latter, the said feeder device (6) comprising feeder elements (6a) elongated in shape and fastened on the said belt (3a) and extending over a predefined length (L1) in projection on a vertical plane and parallel to the direction of advance (A), machine **characterized in that** the feeder element(s) (6a) located at the lowest location of the conveying surface (30a) has (have) a predefined length (L1) such that the free end of this (these) lowest feeder element(s) (6a) of the conveying surface (30a) is located near the rear end of the cutterbar (2).

2. Agricultural machine according to claim 1, **characterized in that** the length (L1) of at least one feeder element (6a) is at least one-eighth the diameter (D) of the outer path of a cutting rotor (2a).

3. Agricultural machine according to any one of claims 1 or 2, **characterized in that** over 60% of the zone extending from the rear of the rotors (2a) to the conveying surface (30a) is covered by the feeder elements (6a).

4. Agricultural machine according to any one of claims 1 to 3, **characterized in that** the conveying surface is substantially perpendicular to the direction of advance (A) in a view along the axes (30b) of the rollers (3b).

5. Agricultural machine according to anyt one of claims 1 to 4, **characterized in that** the conveyor channel (5) is bounded at the bottom by the collecting shield (4), at the front by the cutting rotors (2a), at the rear by the conveying surface (30a) of the belt (3) and at the top by the deflector (9).

6. Agricultural machine according to any one of claims 1 to 5, **characterized in that** the conveying surface (30a) represents over 50%, more preferably over 75% of the rear wall of the conveyor channel (5).

7. Agricultural machine according to any one of claims 1 to 6, **characterized in that** each feeder element (6a) consists of a rod that is thin, narrow or filiform over all or part of its length (L1), at least at its free end.

8. Agricultural machine according to any one of claims 1 to 7, **characterized in that** it comprises a comb (8) extending along an axis substantially parallel to the axes (30b) of the rollers (3b) of the conveyor (3), at least partially rearward of the rollers (3b) of the conveyor (3) and at the location of the inner end of the conveyor (3), the said comb (8) comprising tines (8a) in the shape of blades spaced apart from each other along the direction of the axes (30b) of the rollers (3b) of the conveyor (3).

9. Agricultural machine according to any one of claims 1 to 8, **characterized in that** the cutterbar (2) is suspended on the frame (1) by means of legs (2c), at least one inner leg (2c) being located near the inner end of the cutterbar (2), and **in that** the inner leg (2c) comprises an inner surface (20c) oriented between 30° and 60° relative to the direction of advance (A).

10. Agricultural machine according to any one of claims 1 to 9, **characterized in that** it comprises at least one guiding element (11) located under the belt (3a), the guiding element (11) being in contact with the belt (3a) in order to guide it, and the guiding element (11) being guided in rotation around an axis substantially parallel to the axes (30b) of the rollers (3b) of the conveyor(3).

11. Agricultural machine according to any one of claims 1 to 10, **characterized in that** the width (L2) of the belt (3a) is less than three quarters of the diameter (D) of the outer path of a cutting rotor (2a).

12. Agricultural machine according to any one of claims 1 to 11, **characterized in that** the width (L2) of the belt (3a) is greater than one-quarter of the diameter (D) of the outer path of a cutting rotor (2a).

13. Agricultural machine according to any one of claims 1 to 12, **characterized in that** the conveyor (3) is arranged directly behind the cutterbar (2), **in that** it comprises no roller driven around a horizontal axis, and **in that** no device, additional or not, apart from the cutting rotors (2a) drives the harvest in the direction opposite to the direction of advance (A).
